# EUROPÄISCHE PATENTSCHRIFT

(11) **EP 2 833 031 B1**
(45) Veröffentlichungstag und Bekanntmachung des Hinweises auf die Patenterteilung: **02.11.2016**
(21) Anmeldenummer: 13178502.4
(22) Anmeldetag: 30.07.2013
(51) Int. Cl.: F16H 61/42, F16H 61/444, F16H 61/448, F16H 39/02

(54) **Hydrostatischer Fahrantrieb**
Hydrostatic traction drive
Entraînement de roulement hydrostatique

(43) Veröffentlichungstag der Anmeldung: 04.02.2015
(73) Patentinhaber: Wacker Neuson Linz GmbH, 4063 Hörsching (AT)
(72) Erfinder: Erlinger, Josef, 4173 St. Veit im Mühlkreis (AT); Finzel, Robert, 4060 Leonding (AT); Thumfart, Harald, 4175 Herzogsdorf (AT)
(74) Vertreter: Patentanwaltskanzlei Hübscher

(56) Entgegenhaltungen:
- EP-A2- 1 449 703
- EP-A2- 2 042 745
- DE-B3-102008 062 836
- JP-A- 2000 110 937
- JP-A- 2000 220 737

## Beschreibung

Die Erfindung betrifft einen hydrostatischen Fahrantrieb mit einer Verstellpumpe, mit zwei verstellbaren, eine gemeinsame Abtriebswelle treibenden, Hydromotoren und mit einer hydraulischen Abschaltvorrichtung für wenigstens einen der beiden Hydromotoren, wobei die Abtriebe der beiden Hydromotoren permanent miteinander drehzahlgekoppelt und zumindest annähernd koaxial zueinander angeordnet sind.

Mobile selbstfahrende Arbeitsmaschinen, insbesondere Baumaschinen, Landmaschinen und Forstmaschinen erfordern einen Fahrantrieb, der hohe Zugkräfte erlaubt und für das Zurücklegen größerer Wegstrecken hohe Geschwindigkeiten ermöglicht. Insbesondere Landmaschinen werden auch häufig für Transportfahrten mit Anhänger genutzt und benötigen dabei eine ausreichend hohe Zugkraft bei akzeptablen Geschwindigkeiten, um im Straßenverkehr mitschwimmen zu können. Darum und aus energetischen Gründen sind hohe Wirkungsgrade bei der Leistungsübertragung erforderlich. Um derartige Maschinen in allen Betriebssituationen optimal bedienen zu können, ist eine stufenlose Geschwindigkeitsverstellung über den gesamten Fahrbereich wünschenswert.

Hydrostatische Fahrantriebe erfüllten die Forderungen nach stufenloser Verstellung. Allerdings sind aufgrund der Baugrößen der Komponenten, der maximalen Verstellung der Verdrängervolumina, des zulässigen Schluckvolumenstroms der Hydromotoren, der zulässigen maximalen Drehzahlen und der zulässigen maximalen Drücke sinnvoll erzielbare Grenzen vorhanden. So können Maschinen größerer Leistungsklassen mit Zugkräften über 6 t und Fahrgeschwindigkeiten über 40 km/h nicht mehr mit einfachen geschlossenen Kreisläufen realisiert werden, die aus einer in ihrem Verdrängervolumen verstellbaren Pumpe und einem in seinem Verdrängervolumen verstellbaren Hydromotor bestehen.

Außerdem muss bei einer solchen Anordnung das hydrostatische Getriebe einen großen Wandlungsbereich aufweisen. Die Herausforderung dabei ist, dass die Motoreinheit auch noch dann einen guten Wirkungsgrad liefert, wenn sie auf sehr kleinen Schwenkwinkeln mit hohen Drehzahlen betrieben wird. Weitwinkeleinheiten ermöglichen einen großen Wandlungsbereich. Sie lassen sich bis zu einem nutzbaren Bereich von ca. 37° verschwenken. Allerdings ist die Einheit als kompletter Motor bisher nur in eine Baugröße verfügbar und die Komplexität der Verstellung einer solchen Einheit bringt einen deutlich gesteigerten Kostenaufwand mit sich.

Aus der JP 2000 110937, die die Merkmale des Oberbegriffs von Anspruch 1 offenbart, ist eine Tandempumpe bekannt, bei welcher zwei Pumpen auf einer Welle und in einem einzigen Gehäuse angeordnet sind. Bei dieser Pumpenart werden beide Pumpen immer gleichermaßen, also parallel verstellt. Eine individuelle Einstellung der Pumpen ist nicht vorgesehen.

Die Erfindung hat zur Aufgabe eine stufenlose, zugkraftunterbrechungsfreie und ruckfreie Wandlung der Leistung in einem großen Bereich zu realisieren. Idealerweise so, dass mehrere Motoren ihre Abtriebsleistungen überlagern können. Es sollen möglichst große Zugkräfte von null heraus beim Anfahren und möglichst hohe Endgeschwindigkeiten mit einem zugkraftunterbrechungsfreien Fahrantrieb bereitgestellt werden können.

Die Erfindung löst diese Aufgabe dadurch, dass die beiden Hydromotoren derart verschaltet sind, dass einer der beiden Hydromotoren seine Leistung vordringlich beim Anfahren und im unteren Drehzahlbereich ausspielt und zumindest ab einer bestimmten Abtriebsdrehzahl wenigstens nahezu vollständig auf ein Schluckvolumen der Größe Null schwenkbar ist, und wobei zumindest einer der hydraulischen Anschlüsse dieses Hydromotors hydraulisch vom geschlossenen Kreislauf des Fahrantriebs entkoppelbar ist und dass der zweite Hydromotor seine Leistung vordringlich im mittleren und oberen Drehzahlbereich zur Erreichung einer gewünschten Endgeschwindigkeit ausspielt. Der zweite der Anschlüsse des Hydromotors bleibt der Einfachheit halber vorzugsweise mit dem geschlossenen Kreis verbunden.

Um größere Leistungsbereiche mit einer stufenlosen Verstellung abbilden zu können, wird erfindungsgemäß vorgeschlagen, zwei in ihrem Verdrängervolumen verstellbare Hydromotoren zumindest nahezu koaxial zueinander anzuordnen und in Wirkverbindung zu bringen. Dabei sind die Motoren hydraulisch parallel zueinander in einem gemeinsamen hydraulischen Kreis verschaltet. Gemäß der Erfindung ist diese hydraulische Parallelschaltung durch eine hydraulische Vorrichtung abschaltbar, es kann also einer der beiden Hydromotoren vom Kreislauf hydraulisch entkoppelt werden. Diese Entkopplung erfolgt insbesondere auf der Hochdruckseite während einer bestimmten Drehrichtung (während der Vorwärtsfahrt). Eine Entkopplung während der Rückwärtsfahrt der Maschine ist nicht nötigt. Beide Hydromotoren sind starr drehzahlgekoppelt, wobei einer seine Leistung vordringlich beim Anfahren und im unteren Drehzahlbereich ausspielt. Dieser Hydromotor wird im oberen Drehzahlbereich, der ggf. auch in Maßen über der Nenndrehzahl liegen kann, wenigstens nahezu vollständig auf ein Schluckvolumen der Größe Null verschwenkt und in weiterer Folge hydraulisch vom geschlossenen Kreislauf des Fahrantriebs entkoppelt und vom anderen Hydromotor geschleppt. Der zweite Hydromotor spielt seine Leistung vordringlich im mittleren und oberen Drehzahlbereich aus, ist also dazu ausgelegt die gewünschte Endgeschwindigkeit zu erreichen.

Eine mit einem Diesel- oder Elektromotor angetriebene Verstellpumpe fördert den Volumenstrom eines hydraulischen Fluids in einem geschlossenen Kreis. Die Volumenstrommenge kann über das Verdrängervolumen der Pumpe verändert werden. Dieser Volumenstrom wird an die zwei parallel geschaltete Hydromotoren geleitet und treibt diese in einem geschlossenen Kreislauf an. Die Hydromotoren sind mechanisch nahezu starr in Wirkverbindung gebracht und treiben in der vorzugsweisen Ausführung eine gemeinsame Welle. Nahezu starr bedeutet beispielsweise dass zwischen den beiden Hydromotoren eine Kupplung oder ein Drehschwingungsdämpfer vorgesehen sein kann.

In einer der Druckleitungen zu einem der Hydromotoren ist eine Abschalteinrichtung, ein Ventil, vorgesehen, die den Motor vom geschlossenen Kreis entkoppelt. Erfindungsgemäß kann der weggeschaltete Hydromotoranschluss dann mit dem Tank, mit einer externen Steuerölleitung oder mit der Niederdruckseite des Kreislaufes verbunden werden. Der vom Hochdruck entkoppelte Motor wird bei hohen Drehzahlen nahezu auf Null oder auf Null Schluckvolumen verschwenkt. Dazu wird vorzugsweise ein Sensorsignal verarbeitet, welches die Wellendrehzahl auswertet.

Die Verstellung der Hydromotoren erfolgt über eine Elektronik oder rein hydraulisch bzw. mechanisch in Abhängigkeit der Wellendrehzahl. In einer besonders günstigen Ausführung der Erfindung kann die Verstellung der Motoren komplett hydraulisch mechanisch erfolgen, sodass eine kostspielige und störanfällige Elektronik komplett entfallen kann.

Für den erfindungsgemäßen Fahrantrieb ist es insbesondere von Vorteil, wenn die Hydromotoren auf einer gemeinsamen Welle angeordnet sind, wobei dann zumindest einer der beiden Motoren einen mechanischen Durchtrieb aufweist. Damit lässt sich die geforderte mechanische Kupplung bei kompaktem Bauaufwand problemlos realisieren und kann auf ein gesondertes Getriebe verzichtet werden. Bei entsprechender Auslegung kann der vom hydraulischen Kreislauf abkoppelbare Hydromotor vom anderen Hydromotor gegebenenfalls in erlaubten Bereichen auch oberhalb seiner Nenndrehzahl bei null Schluckvolumen geschleppt werden. Falls es erforderlich ist, können die Hydromotoren aber auch die gemeinsame Abtriebswelle unter Zwischenschaltung einer oder mehrerer Getriebestufen treiben.

Ist der wenigstens nahezu vollständig auf ein Schluckvolumen der Größe Null schwenkbare Hydromotor als Axialkolbenmotor Schrägscheibenbauweise ausgeführt, so lässt sich die Erfindung mit einem minimalen Kostenaufwand realisieren. Zur Umsetzung möglichst kompakter Bauverhältnisse, also einer besonders kurz bauenden Motoreinheit, empfiehlt es sich aber, wenn der wenigstens nahezu vollständig auf ein Schluckvolumen der Größe Null schwenkbare Hydromotor als Radialkolbenmotor ausgeführt ist. Die beiden Motorbauformen können allerdings auch in beliebiger Weise kombiniert werden.

Der vom geschlossenen Kreislauf des Fahrantriebs entkoppelte Hydromotor kann an eine gesonderte Druckquelle, beispielsweise an den Speisedruck des Fahrantriebes oder des Geräteantriebs, angeschlossen sein. Je nach den Erfordernissen kann der vom geschlossenen Kreislauf des Fahrantriebs entkoppelte Hydromotor allerdings auch an eine Tankleitung angeschlossen sein.

Besonders kompakte Konstruktionsverhältnisse und Bauverhältnisse für einen erfindungsgemäßen hydrostatischen Fahrantrieb ergeben sich, wenn beide Hydromotoren und die zugehörige Ventiltechnik in einem gemeinsamen Gehäuse angeordnet sind. Ebenso können die hydraulischen Absperrvorrichtungen für das Trennen des einen Hydromotors vom geschlossenen Kreis des Fahrantriebes in dessen Motorgehäuse bzw. im gemeinsamen Gehäuse integriert bzw. angeordnet sein. Einfache Verhältnisse für die Steuerung ergeben sich, wenn die Abschaltvorrichtung vorzugsweise über einen Drehzahlsensor über eine der beiden Wellen drehzahlgesteuert ist. Die Verstellung der Motoren erfolgt meist, wie üblich elektroproportional, wenn aber besonders robuste Konstruktions- und Bauverhältnisse erforderlich sind, empfiehlt es sich die Verstellung rein hydraulisch bzw. mechanisch auszuführen .

In der Zeichnung ist die Erfindung an einem Ausführungsbeispiel schematisch dargestellt. Es zeigen
Fig. 1 ein Blockschaltbild eines einfachen erfindungsgemäßen Fahrantriebes,
Fig. 2 ein Blockschaltbild einer Konstruktionsvariante eines Fahrantriebes aus

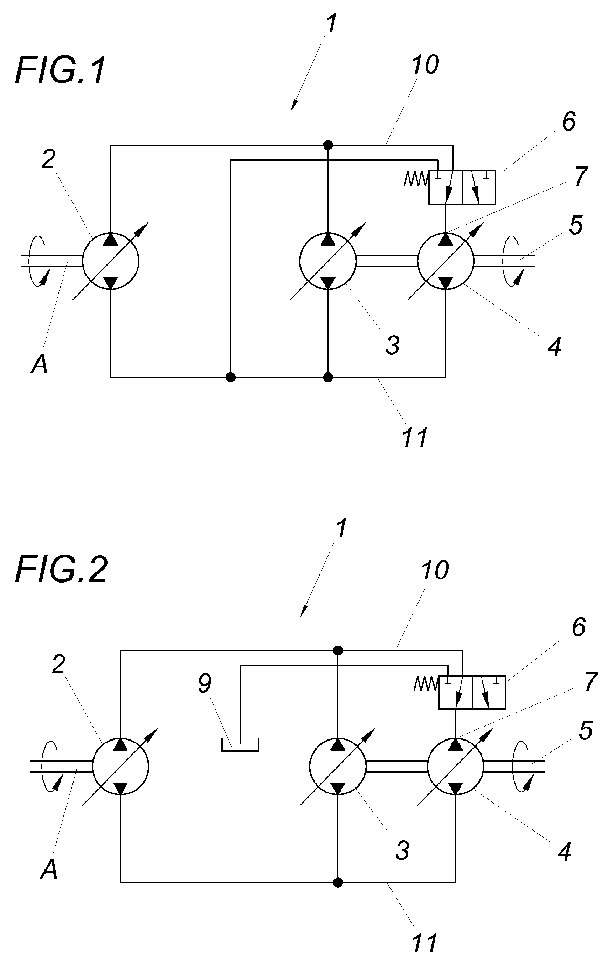

Fig. 1 und

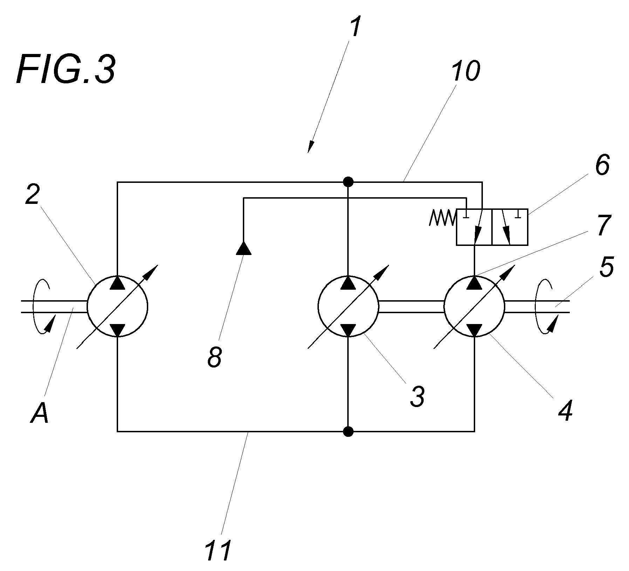

Fig. 3 ein Blockschaltbild einer weiteren Konstruktionsvariante eines Fahrantriebes aus Fig. 1

Ein erfindungsgemäßer Fahrantrieb 1 umfasst eine Verstellpumpe 2, die von einer nicht näher dargestellten Antriebseinrichtung, einer Verbrennnungskraftmaschine, einem Elektromotor oder dgl., über eine Welle A angetrieben wird. Des Weiteren umfasst der Fahrantrieb 1 zwei in einem geschlossenen hydraulischen Kreislauf parallel verschaltete Hydromotoren 3, 4, die eine gemeinsame Abtriebswelle 5 treiben. Zudem ist eine hydraulische Abschaltvorrichtung 6, ein Ventil, für einen der beiden Hydromotoren 4 vorgesehen.

Die Abtriebe beider Hydromotoren 3, 4 sind permanent miteinander drehzahlgekoppelt. Zudem sind beide Hydromotoren 3, 4 koaxial zueinander angeordnet, was insbesondere dadurch realisiert ist, dass die Hydromotoren auf einer gemeinsamen Welle 5 angeordnet sind. Zwischen den Hydromotoren 3, 4 kann gegebenenfalls ein ein- oder mehrstufiges Getriebe vorgesehen sein. Dazu weist zumindest einer der beiden Hydromotoren 4 einen mechanischen Durchtrieb auf. Die gemeinsame Welle kann aber auch unterbrochen sein und an der Durchbruchstelle eine Kupplung bzw. ein Drehschwingungsdämpfer angeordnet sein. Einer der beiden Hydromotoren 4 ist zumindest ab einer bestimmten Abtriebsdrehzahl wenigstens nahezu vollständig auf ein Schluckvolumen der Größe Null schwenkbar, wobei zumindest einer der beiden hydraulischen Anschlüsse dieses Hydromotors 4 hydraulisch über die Abschaltvorrichtung 6 vom geschlossenen Kreislauf des Fahrantriebs entkoppelbar ist.

Im Ausführungsbeispiel nach Fig. 1 ist der hydraulische Anschluss 7 des Hydromotors 4 entweder über das Ventil an die Druckseite, die Leitung 10 des geschlossenen Kreislaufs angeschlossen oder bei zumindest nahezu auf Null verschwenktem Schluckvolumen mit der Niederdruckseite 11 des geschlossenen Kreislaufes verbunden, womit an den Motoranschlüssen praktisch keine Druckdifferenz mehr anliegt.

Im Ausführungsbeispiel nach Fig. 2 ist der entkoppelte Hydromotor 4 mit dem Tank 9 verbunden und im Ausführungsbeispiel nach Fig. 3 an eine gesonderte Druckquelle 8, beispielsweise einen Speisedruck eines Gerätetriebs, angeschlossen.

## Patentansprüche

1. Hydrostatischer Fahrantrieb (1) mit einer Verstellpumpe (2), mit zwei verstellbaren, eine gemeinsame Abtriebswelle (5) treibenden, Hydromotoren (3, 4) und mit einer hydraulischen Abschaltvorrichtung (6) für wenigstens einen der beiden Hydromotoren (4), wobei die Abtriebe der beiden Hydromotoren (3, 4) permanent miteinander drehzahlgekoppelt und zumindest annähernd koaxial zueinander angeordnet sind, **dadurch gekennzeichnet, dass** die beiden Hydromotoren (3, 4) derart verschaltet sind, dass ein erster der beiden Hydromotoren (4) seine Leistung vordringlich beim Anfahren und im unteren Drehzahlbereich ausspielt und zumindest ab einer bestimmten Abtriebsdrehzahl wenigstens nahezu vollständig auf ein Schluckvolumen der Größe Null schwenkbar ist, wobei zumindest einer der hydraulischen Anschlüsse (7) dieses Hydromotors (4) hydraulisch vom geschlossenen Kreislauf des Fahrantriebs entkoppelbar ist und dass ein zweiter der beiden Hydromotoren (3) seine Leistung vordringlich im mittleren und oberen Drehzahlbereich zur Erreichung einer gewünschten Endgeschwindigkeit ausspielt.

2. Hydrostatischer Fahrantrieb nach Anspruch 1 **dadurch gekennzeichnet, dass** die Hydromotoren auf einer gemeinsamen Welle angeordnet sind, wobei zumindest einer der beiden Motoren (4) einen mechanischen Durchtrieb aufweist.

3. Hydrostatischer Fahrantrieb nach Anspruch 1, **dadurch gekennzeichnet, dass** die Hydromotoren (3, 4) die gemeinsame Abtriebswelle unter Zwischenschaltung einer oder mehrerer Getriebestufen treiben.

4. Hydrostatischer Fahrantrieb nach Anspruch 1 bis 3, **dadurch gekennzeichnet, dass** der wenigstens nahezu vollständig auf ein Schluckvolumen der Größe Null schwenkbare erste Hydromotor (4) als Axialkolbenmotor in Schrägscheibenbauweise ausgeführt ist.

5. Hydrostatischer Fahrantrieb nach Anspruch 1 bis 3, **dadurch gekennzeichnet, dass** der wenigstens nahezu vollständig auf ein Schluckvolumen der Größe Null schwenkbare erste Hydromotor (4) als Radialkolbenmotor ausgeführt ist.

6. Hydrostatischer Fahrantrieb nach Anspruch 1 bis 5, **dadurch gekennzeichnet, dass** der erste Hydromotor (4) in einem entkoppeltem Zustand vom geschlossenen Kreislauf des Fahrantriebs (1) entkoppelt und an eine gesonderte Druckquelle (8), beispielsweise an den Speisedruck des Fahrantriebes, angeschlossen ist.

7. Hydrostatischer Fahrantrieb nach Anspruch 1 bis 5, **dadurch gekennzeichnet, dass** der erste Hydromotor (4) in einem entkoppeltem Zustand vom geschlossenen Kreislauf des Fahrantriebs (1) entkoppelt und mit dem Tank (9) verbunden ist.

8. Hydrostatischer Fahrantrieb nach Anspruch 1 bis 7, **dadurch gekennzeichnet, dass** beide Hydromotoren (9, 4) und eine zugehörige Ventiltechnik, insbesondere die Abschaltvorrichtung 6, in einem gemeinsamen Gehäuse angeordnet sind.

9. Hydrostatischer Fahrantrieb nach Anspruch 1 bis 8, **dadurch gekennzeichnet, dass** die hydraulische Abschaltvorrichtung (6) für das Trennen des ersten Hydromotors (4) vom geschlossenen Kreis des Fahrantriebes (1) in dessen Motorgehäuse integriert ist.

10. Hydrostatischer Fahrantrieb nach Anspruch 1 bis 9, **dadurch gekennzeichnet, dass** die Abschaltvorrichtung (6) über einen Sensor, vorzugsweise einen Drehzahlsensor an, einer der Wellen (5), gesteuert ist.

11. Hydrostatischer Fahrantrieb nach Anspruch 1 bis 10, **dadurch gekennzeichnet, dass** die Verstellung der Hydromotoren (3, 4) rein hydraulisch und/oder mechanisch erfolgt.

## Claims

1. Hydrostatic traction drive (1) having a variable displacement pump (2), having two displaceable hydraulic motors (3, 4) driving a common driven shaft (5), and having a hydraulic shut-off device (6) for at least one of the two hydraulic motors (4), the outputs of the two hydraulic motors (3, 4) being permanently coupled together in terms of rotational speed and being arranged at least approximately coaxially with respect to each other, **characterised in that** the two hydraulic motors (3, 4) are connected such that a first one of the two hydraulic motors (4) primarily performs best when starting up and in the lower rotational speed range and can be turned to zero displacement at least virtually completely at least from a particular output rotational speed, wherein at least one of the hydraulic connections (7) of this hydraulic motor (4) can be hydraulically decoupled from the closed circuit of the traction drive, and that a second one of the two hydraulic motors (3) primarily performs best in the middle and upper rotational speed range in order to achieve a desired final speed.

2. Hydrostatic traction drive as claimed in claim 1, **characterised in that** the hydraulic motors are arranged on a common shaft, wherein at least one of the two motors (4) has a mechanical fixed drive.

3. Hydrostatic traction drive as claimed in claim 1, **characterised in that** the hydraulic motors (3, 4) drive the common driven shaft with one or more gears being interconnected.

4. Hydrostatic traction drive as claimed in claims 1 to 3, **characterised in that** the first hydraulic motor (4) which can be turned to zero displacement at least virtually completely is formed as an axial piston motor in a swash plate design.

5. Hydrostatic traction drive as claimed in claims 1 to 3, **characterised in that** the first hydraulic motor (4) which can be turned to zero displacement at least virtually completely is formed as a radial piston motor.

6. Hydrostatic traction drive as claimed in claims 1 to 5, **characterised in that** the first hydraulic motor (4) is decoupled from the closed circuit of the traction drive (1) in a decoupled state and is connected to a separate pressure source (8), e.g. to the charge pressure of the traction drive.

7. Hydrostatic traction drive as claimed in claims 1 to 5, **characterised in that** the first hydraulic motor (4) is decoupled from the closed circuit of the traction drive (1) in a decoupled state and is connected to the reservoir (9).

8. Hydrostatic traction drive as claimed in claims 1 to 7, **characterised in that** the two hydraulic motors (9, 4) and associated valve technology, in particular the shut-off device (6), are arranged in a common housing.

9. Hydrostatic traction drive as claimed in claims 1 to 8, **characterised in that**, in order to separate the first hydraulic motor (4) from the closed circuit of the traction drive (1), the hydraulic shut-off device (6) is integrated in the motor housing thereof.

10. Hydrostatic traction drive as claimed in claims 1 to 9, **characterised in that** the shut-off device (6) is controlled via a sensor, preferably a rotational speed sensor, on one of the shafts (5).

11. Hydrostatic traction drive as claimed in claims 1 to 10, **characterised in that** the displacement of the hydraulic motors (3, 4) is effected in a purely hydraulic and/or mechanical manner.

## Revendications

1. Entraînement de roulement hydrostatique (1) avec une pompe de réglage (2), avec deux moteurs hydrauliques (3, 4) réglables, entraînant un arbre de sortie (5) commun et avec un dispositif d'arrêt (6) hydraulique pour au moins un des deux moteurs hydrauliques (4), les transmissions des deux moteurs hydrauliques (3, 4) étant accouplées en vitesse de rotation ensemble de façon permanente et disposées au moins sensiblement coaxialement l'une par rapport à l'autre, **caractérisé en ce que** les deux moteurs hydrauliques (3, 4) sont montés de telle sorte qu'un premier des deux moteurs hydrauliques (4) délivre sa puissance en priorité au démarrage et à bas régime et peut être pivoté au moins à partir d'une vitesse de rotation de transmission prédéfinie au moins sensiblement entièrement sur un volume absorbé de grandeur nulle, au moins un des raccords hydrauliques (7) de ce moteur hydraulique (4) pouvant être découplé hydrauliquement du circuit fermé de l'entraînement de roulement et **en ce qu'**un deuxième des deux moteurs hydrauliques (3) délivre sa puissance en priorité à moyen et haut régimes pour atteindre une vitesse finale souhaitée.

2. Entraînement de roulement hydrostatique selon la revendication 1, **caractérisé en ce que** les moteurs hydrauliques sont disposés sur un arbre commun, au moins un des deux moteurs (4) présentant une transmission mécanique.

3. Entraînement de roulement hydrostatique selon la revendication 1, **caractérisé en ce que** les moteurs hydrauliques (3, 4) entrainent l'arbre de sortie commun par l'intermédiaire d'un ou plusieurs étage(s) de transmission.

4. Entraînement de roulement hydrostatique selon la revendication 1 à 3, **caractérisé en ce que** le premier moteur hydraulique (4) pouvant être pivoté au moins sensiblement entièrement sur un volume absorbé de grandeur nulle est réalisé en tant que moteur à pistons axiaux, à construction à disque incliné.

5. Entraînement de roulement hydrostatique selon la revendication 1 à 3, **caractérisé en ce que** le premier moteur hydraulique (4) pouvant pivoter au moins sensiblement entièrement sur un volume absorbé de grandeur nulle est réalisé en tant que moteur à pistons radiaux.

6. Entraînement de roulement hydrostatique selon la revendication 1 à 5, **caractérisé en ce que** le premier moteur hydraulique (4) peut, en état découplé, être découplé du circuit fermé de l'entraînement de roulement (1) et raccordé à une source de pression (8) séparée, par exemple à la pression d'alimentation de l'entrainement de roulement.

7. Entraînement de roulement hydrostatique selon la revendication 1 à 5, **caractérisé en ce que** le premier moteur hydraulique (4) peut, en état découplé, être découplé du circuit fermé de l'entraînement de roulement (1) et raccordé au réservoir (9).

8. Entraînement de roulement hydrostatique selon la revendication 1 à 7, **caractérisé en ce que** les deux moteurs hydrauliques (3*), 4) et une technique de vannes associée, en particulier le dispositif d'arrêt (6), sont disposés dans un carter commun.

9. Entraînement de roulement hydrostatique selon la revendication 1 à 8, **caractérisé en ce que** le dispositif d'arrêt (6) hydraulique pour isoler le premier moteur hydraulique (4) du circuit fermé de l'entrainement de roulement (1) est intégré dans le carter de moteur.

10. Entraînement de roulement hydrostatique selon la revendication 1 à 9, **caractérisé en ce que** le dispositif d'arrêt (6) est commandé par un capteur, de préférence un capteur de vitesse de rotation, au niveau d'un des arbres (5).

11. Entraînement de roulement hydrostatique selon la revendication 1 à 10, **caractérisé en ce que** le réglage des moteurs hydrauliques (3, 4) est effectué purement hydrauliquement et/ou mécaniquement. (*) A la revendication 8, la référence (9) pour « Hydromotoren » a été remplacée par « 3 ».
